# FASCICULE DE BREVET EUROPEEN

(11) **EP 2 416 646 B1**
(45) Date de publication et mention de la délivrance du brevet: **26.12.2018**
(21) Numéro de dépôt: 10723188.8
(22) Date de dépôt: 02.04.2010
(51) Int. Cl.: A01N 1/00, A01N 31/02

(54) **COMPOSITIONS POUR LA CONSERVATION DU CORPS HUMAIN OU ANIMAL**
ZUSAMMENSETZUNGEN ZUR KONSERVIERUNG VON MENSCHLICHEN UND TIERISCHEN KÖRPERN
COMPOSITIONS FOR CONSERVING HUMAN AND ANIMAL BODIES

(30) Priorité: 07.04.2009 FR 0952251
(43) Date de publication de la demande: 15.02.2012
(73) Titulaire: Arkema France, 92700 Colombes (FR)
(72) Inventeur: SIGOURE, Jean, F-42300 Mably (FR); COUTURIER, Jean-Luc, F-69006 Lyon (FR); DUBOIS, Jean-Luc, F-69390 Millery (FR)
(74) Mandataire: Killis, Andréas
(86) Numéro de dépôt international: PCT/FR2010/050632
(87) Numéro de publication internationale: WO 2010/116075

(56) Documents cités:
- EP-A- 1 938 684
- US-A- 3 573 082
- US-A- 5 405 606
- US-A- 5 827 511

## Description

La présente invention est relative au domaine de la conservation des cadavres humains ou animaux. Plus particulièrement, l'invention concerne une nouvelle composition, à visée non thérapeutique, renfermant au moins un POM (PolyOxyMéthylènedialkyléther), et au moins un diol spécifique. Elle concerne également l'utilisation, à visée non thérapeutique, de cette composition pour conserver et/ou embaumer un corps humain ou animal.

La thanatopraxie, ou embaumement du corps mort, est une pratique réclamée par les familles des défunts pour conserver au corps un aspect acceptable jusqu'à son inhumation ou sa crémation. Cependant, dans certaines circonstances, cet acte peut devenir obligatoire, notamment dans les cas de déplacements internationaux des corps, de transports des corps avant crémation dans des cercueils à parois plus minces que ceux destinés à être enterrés, voire en l'absence de cercueil, dans certains cas de réintégration à leur domicile du corps de personnes décédées dans un centre hospitalier, et aussi dans certains cas de dépôt en caveau provisoire.

En outre, la conservation hygiénique des corps est le moyen moderne et efficace d'éviter la propagation des maladies par le contact des vivants et des morts, ainsi que la pollution et la souillure des objets et de l'habitat.

On connaît différents composés qui sont utilisés pour embaumer et/ou conserver les cadavres humains ou animaux. Notamment, le phénol et des aldéhydes tels que le formaldéhyde et le glutaraldéhyde (pentanedial-1,5) sont couramment utilisés dans ce domaine.

Cependant, ces composés utilisés à haute dose sont malodorants, toxiques et ont tendance à laisser les corps traités dans un état rigide.

Le brevet français FR 1 457 037 divulgue une composition de conservation de corps d'animaux morts comprenant des δ-lactones qui contiennent un hétéroatome d'oxygène supplémentaire dans le noyau. Cette composition peut être appliquée au cadavre par immersion, par infusion ou par injection.

Le brevet américain US 5 827 511 décrit une composition injectable par voie artérielle comprenant du glutaraldéhyde, au moins un éther aromatique d'éthanol, au moins un agent hydratant comme l'éthylène glycol et au moins un alcool.

Le brevet EP 1 127 490 décrit une composition comprenant au moins du glycérol et à titre de principe actif un hydroalcoolat de propolis. Cette composition peut être badigeonnée sur le cadavre ou injectée par voie artérielle.

Le brevet WO2004/093541 divulgue une composition injectable comprenant de l'éthanedial encore appelé glyoxal et un solvant polaire aprotique comme le DMSO (diméthylsulfoxide) en solution aqueuse.

Le brevet RU 2 116 725 décrit une solution à base de diéthylacétal (ou 1,1-diéthoxyéthane) pour embaumer les corps.

EP 1938684 décrit l'utilisation, pour la conservation du corps humain ou animal et/ou l'embaumement des corps morts, d'au moins un composé de formule R-(OCH₂)ₙ-OR' avec R et R' étant identiques ou différents et représentant un radical alkyle linéaire ou ramifié, comportant 1 à 5 atomes de carbone et n étant un indice de valeur entre 1 et 8 et/ou d'au moins un composé de type acétal de dialdéhyde. Est décrit également une composition comprenant ledit composé et un procédé de conservation d'un corps humain ou animal et/ou d'embaumement d'un corps mort.

US 3,573,082 décrit l'utilisation de compositions aqueuses d'alkylène glycol avec un fixatif pour la conservation d'espèces animales et végétales mais sans présence de polyoxyméthylène dialkyl éthers.

US 5,405,606 décrit une composition pour conservation ou embaument, qui comprend le glutaraldéhyde, un éther aromatique de l'éthanol, un alcool et un alcool polyhydrique comme humectant, ladite composition étant libre de formaldéhyde.

Il subsiste donc le besoin de disposer de compositions non toxiques pour le thanatopracteur et qui permettent de conserver efficacement et rapidement les corps sans porter atteinte à leur intégrité.

Dans ce contexte, la demanderesse a déposé la demande de brevet Français FR2910784, qui décrit l'utilisation de compositions pour la conservation et ou l'embaumement des corps. Ces compositions comprenant un POM, ainsi que 200ml de glycérol, 100ml de solution saline, 80ml de savon et 20ml de colorant et d'essence végétales.

Les inventeurs ont maintenant montré que de nouvelles compositions renfermant au moins un POM, et au moins un diol spécifiques permettent d'obtenir des résultats encore meilleurs que ceux obtenus avec les compositions décrites dans la demande de brevet Français FR2910784. Notamment, les nouvelles compositions selon l'invention sont beaucoup plus homogènes que les compositions précédentes, de sorte qu'il n'est pas nécessaire d'agiter la composition avant de l'utiliser, les nouvelles compositions permettent également d'obtenir, après application, une souplesse plus importante de la peau ainsi qu'une meilleure coloration de la peau. En effet, après application la coloration est plus homogène, il n'y a plus de zones ou de plaques qui seraient plus colorées que d'autres. Notamment, les oreilles reprennent une coloration plus naturelle.

De plus, les nouvelles compositions selon l'invention affectent peu l'aspect esthétique du corps, en particulier n'augmentant pas, ou que dans une faible mesure, la rigidité, la pâleur, les émanations d'odeurs et/ou la déshydratation du corps.

L'invention vise plus précisément une composition renfermant :
(a) au moins un polyoxyméthylènedialkyléther (POM) de formule (I) :

   R-(OCH₂)ₙ-OR' (I)

   dans laquelle R et R' , identiques, représentent un radical méthyle et n est un indice de valeur comprise entre 2 et 8,
(b) un diol comprenant 2 à 6 atomes de carbone qui est le propylène glycol,
avec ladite composition comprenant 50-95% en volume dudit composé (I), 5 à 50% en volume de propylène glycol, et 0-5% en volume d'au moins un agent colorant et/ou aromatisant.

Il est entendu que, dans le contexte de cette description, le terme « compris entre » doit être interprété comme incluant les bornes indiquées.

Au sens de l'invention, on entend par « conserver », le fait que l'action enzymatique est arrêtée ou freinée dans le tissu humain ou animal, par rapport au tissu non traité, ce qui empêche ou ralentit la destruction auto-catalytique de ce tissu, et/ou que les tissus résistent mieux aux attaques extérieures des bactéries et des mycètes que des tissus non traités.

Les composés POMM utilisés selon l'invention sont des PolyOxyMéthylènedialkyléthers qui sont désignés par le sigle POM pour PolyOxyMéthylène auquel sont adjointes la lettre M permettant d'identifier les radicaux méthyle, ainsi que par un indice correspondant au nombre n de motifs (CH₂O).

Ainsi, ces produits sont dénommés POMMₙ (polyoxyméthylènediméthyléther) quand l'alkyle est le groupement méthyle, CH₃-(OCH₂)ₙ-OCH₃.

On appellera POMMn le composé avec n unités oxyméthylène (formol). Ainsi le méthylal (n=1), sera appelé POMM₁. Si on utilise un mélange de produits issus d'une même synthèse, on l'appellera par exemple POMM₃₋₈, pour un mélange contenant des POMM de n = 3 à 8.

Les avantages que présentent les POM sont vraisemblablement liés à leur nature chimique qui dépend elle-même de leur mode de synthèse, par lequel il est possible de contrôler la longueur de chaîne. D'une manière générale, le point d'ébullition des POM augmente avec le nombre d'unités formol (CH₂O) et avec la longueur de la chaîne alkyle. Par contre, la solubilité dans l'eau diminue avec la longueur de chaîne (-CH₂O-)ₙ et avec la longueur des chaînes alkyle.

Un autre avantage des POM est leur faible coût. En effet, la synthèse des POM fait appel au méthanol et au formol, lui même produit à partir de méthanol.

La synthèse des POM est bien connue depuis de nombreuses années.

Notamment, le livre de J.F. Walker, "FORMALDEHYDE", Robert E. Krieger Publishing Company, Huntington, New York, 3e Edition de 1975 est un ouvrage de référence en la matière. On peut en effet y trouver la description des modes de synthèse aux pages 167 et suivantes, d'une part, et 264 et suivantes, d'autre part. Ces procédés de synthèse sont fondés sur une catalyse acide de la réaction d'un alcool (méthanol ou éthanol) ou d'un acétal (méthylal ou éthylal), sur du formol ou un composé équivalent. Ce type de synthèse est également illustré dans de nombreux documents de brevets tels que US 2,449,469 ou JP 47-40772.

D'autres méthodes de synthèse fondées sur une catalyse de type acides de Lewis ont été également décrites. On peut citer le document de brevet GB 1120524 qui décrit la synthèse de polyoxyméthylènes diéthers stables avec des catalyseurs ioniques de type acides de Lewis.

Selon un mode de réalisation avantageux, l'invention vise l'utilisation d'au moins un composé choisi parmi CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃.

Selon un mode de réalisation préféré, l'invention vise l'utilisation d'un mélange de composés de formule R-(OCH₂)ₙ-OR dans laquelle R représente un méthyle et n va de 2 à 8.

Selon un mode de réalisation encore plus préféré, l'invention vise l'utilisation d'au moins un composé POMM₂₋₈ qui est un mélange de composés de formule CH₃-(OCH₂)n-OCH₃ avec n compris entre 2 et 8, dont la composition est par exemple la suivante :

| n | 2 | 3 | 4 | 5 | 6 | 7 | 8 |
|---|---|---|---|---|---|---|---|
| % | 30-55 | 20-40 | 10-20 | 3-10 | 1-5 | <2 | <1 |

Plus particulièrement, une composition préférée d'un composé POMM₂₋₈ est la suivante :

| N | 2 | 3 | 4 | 5 | 6 | 7 | 8 |
|---|---|---|---|---|---|---|---|
| % | 48 | 33 | 12 | 4 | 1,5 | 0,5 | <0,5 |

Le ou les composé(s) POMM peuvent représenter de 5 à 95% en poids, par exemple de 50 à 90% en poids, par rapport au poids total de la composition selon l'invention. La formule est ensuite diluée dans de l'eau pour l'amener aux concentrations adaptées au corps (poids, volume...) à traiter.

Outre ces composés, la composition selon l'invention peut renfermer au moins un agent colorant tel que le jaune orangé S, le dioxyde de titane et/ou l'oxyde de zinc ; au moins un agent aromatisant tel que la menthe, la coriandre, le thym, la citronnelle et/ou le pamplemousse ; au moins un agent humectant ; et leurs mélanges.

Des exemples d'agents colorés préférés, sont l'acide carminique (ou carmin ou rouge cochenille, E120), l'azorubine (E122), l'amarante (E123), le Ponceau 4R (ou rouge cochenille A, E124), l'érythrosine (E127), le Rouge 2G (E128), le Rouge allura AC (E129), l'extrait de paprika (ou capsanthéine ou capsorubine, E160c), le lycopène (E160d), l'apocaroténal (E160e), la zéaxanthine (E161h), le rouge de betterave (ou bétanine, E162), les anthocyanes (E163) dont l'extrait de peau de raisin (E163ii), l'extrait de cassis (E163iii), le colorant du mais pourpre (E163iv), le colorant du chou rouge (E163v), l'oxyde de fer rouge (E172ii), l'acide tannique (ou Pigment rubis BK, E180), les tannins (E181), le rouge Congo, le rouge de crésol, le rouge de méthyle, le rouge de phénol, le rouge neutre, le rouge de ruthénium, le rouge Soudan, et les mélanges de ceux-ci.

Outre ces composés, la composition selon l'invention peut renfermer au moins un agent biocide.

Par cette expression, on entend notamment les composés identifiés comme tels dans le Règlement CE n° 1048/2005 du 13 juin 2005 en tant que "substances actives de fluides utilisés pour l'embaumement et la taxidermie", à savoir : le formaldéhyde, le dioxyde de soufre, l'hydrogénosulfite de sodium, le disulfite de sodium, le sulfite de sodium, le sulfite de potassium, le disulfite de potassium, le bronopol, la 1,2-benzisothiazole-3(2H)-one, le monochlorhydrate de dodécylguanidine, le glutaral, le dithioxyanate de méthylène, le monochlorhydrate de polymère de N,N"'-1,6-hexanediylbis[N'-cyanoguanidine] et d'hexaméthylène diamine/polyhexaméthylène biguanide, le peroxyde de butanone-2, le 3-(2,2-dichlorovinyl)-2,2-diméthylcyclopropanecarboxylate de m-phénoxybenzyle/perméthrine, les chlorures d'ammonium quaternaire, la bis(trichlorométhyl)sulfone, l'acide borique, la N,N-diéthyl-m-toluamide, la 2-méthyl-2H-isothiazole-3-one. On peut également utiliser comme biocides les composés de formule (C₃H₄O)ₙ.(C₃H₄O₂)ₘ où n>m, tels que le Chemyde® de la société CHEMEQ, ainsi que l'iodure de polyvinylpyrrolidone, disponible notamment auprès de la société GRAYMOR CHEMICAL HAMBURG et décrit dans la demande de brevet EP1365646 et leurs mélanges.

Ces agents biocides sont généralement présents en faible quantité dans la composition selon l'invention. Ils représentent ainsi par exemple de 2 à 90 % en poids, de préférence de 4 à 50 % en poids, par rapport au poids total de la composition. Avant usage, la composition peut être diluée par le thanatopracteur de sorte que la concentration en agent biocide soit par exemple comprise entre 0,2 et 80 % en poids.

La composition selon l'invention peut également renfermer au moins un agent pro-pénétrant.

Par cette expression, on entend les agents (autres que l'eau) favorisant la pénétration de la composition dans le corps, au travers des conduits sudoripares, via les follicules pileux ou les glandes sébacées, ou bien au travers du stratum corneum et jusque dans le derme. Ce dernier type d'agents pro-pénétrants est préféré pour une utilisation dans la présente invention. Ces agents peuvent augmenter la perméabilité du stratum corneum, par exemple en dissolvant ou désorganisant la structure lipidique bicouche intercellulaire ou en agissant avec les protéines intracellulaires ou en améliorant le coefficient de partition des POMM dans le stratum corneum. En variante, les agents pro-pénétrants peuvent agir comme vecteurs améliorant le transport des composés POMM au travers du stratum corneum.

Des agents pro-pénétrants utilisables dans la présente invention sont notamment : les mono-alcools linéaires ou ramifiés en C₂-C₆ tels que l'éthanol ou le n-butanol ; les polyols tels que le propylène glycol, le glycérol, le dipropylène glycol et le polyéthylèneglycol ; les acides gras, de préférence mono- ou polyinsaturés, en C₈-C₂₂ tels que les acides oléique, linoléique, laurique, caprylique ou caprique ; les cyclodextrines ; l'isosorbide et les dérivés de l'iosorbide comme le diméthylisosorbide (voir la demande US 2008/0003273)et le dinitrate d'isosorbide, les tensioactifs dont les esters d'acides gras de sucrose, tels que l'oléate de sucrose, les esters d'acides gras et de sorbitane, les éthers d'alcools gras et de polyéthylèneglycol (PEG), tels que les oléyléthers de PEG, les huiles de ricin hydrogénées polyéthoxylées et les phospholipides, tels que la lécithine ; les esters tels que les acétates d'alkyle en C1-C4, les mono- et polyesters d'acide gras et de glycérol ou de propylène glycol, tels que le mono-laurate ou le tri-oléate de glycérol, les esters d'alcools gras d'acide lactique ou d'acide glycolique et les esters d'acides gras et d'isopropyle ; les alcools gras en C8-C18, tels que le n-nonanol, l'alcool oléylique et l'alcool laurylique ; les azones tels que la N-alkylazacycloheptan-2-one ; les N,N-dialkylamino-alcanoates d'alkyle tels que le 2-(N,N diméthylamino)-propionate de dodécyle (DDAIP); les amides telles que la N,N-diéthyl-m-toluamide ; l'urée et les dérivés d'urée tels que l'allantoïne ; les terpènes et terpénoïdes tels que les huiles essentielles, par exemple le menthol, le thymol et le camphre ; le nicotinate de méthyle ou de benzyle ; les sulfoxydes tels que le DMSO (diméthylsulfoxyde) ou le décylméthylsulfoxyde ; et leurs mélanges.

D'autres exemples d'agents pro-pénétrants sont cités par OSBORNE et al. dans l'article "Skin Penetration Enhancers Cited in the Technical Literature", publié dans Pharmaceutical Technology (Novembre 1997). Des mélanges de mono-alcools ou de cyclodextrines avec d'autres agents pro-pénétrants sont particulièrement utiles. On préfère par ailleurs que les agents pro-pénétrants selon l'invention ne comprennent pas de pyrrolidones (telles que la N-méthyl-2-pyrrolidone).

Dans certains cas, pour améliorer la pénétration de la composition dans la peau, l'agent pro-pénétrant peut être utilisé pour encapsuler les POMM dans des vésicules, telles que des liposomes, des niosomes ou des nanocapsules, ou pour former des complexes à partir de ces composés. Il est ainsi possible, notamment, de former des complexes d'inclusion de ces composés actifs avec une cyclodextrine.

Les agents pro-pénétrants peuvent par exemple représenter de 1 à 80 % en poids, de préférence de 5 à 70 % en poids, par rapport au poids total de la composition. Selon une forme d'exécution de l'invention, ils peuvent être présents dans un ratio avec les POMM permettant l'obtention d'un mélange eutectique.

Cette composition peut se présenter sous toute forme galénique convenant à une application topique sur la peau, en particulier sous forme de solution, d'émulsion ou de gel. Elle peut avoir une consistance liquide, semi-liquide ou solide et se présenter ainsi sous forme de lotion, de fluide, de crème, de pâte, voire de mousse. Cette composition peut éventuellement être conditionnée dans un flacon-pompe ou un dispositif aérosol.

L'invention a également pour objet l'utilisation topique de la composition précitée pour la conservation du corps humain ou animal.

Dans un mode de réalisation avantageux, le corps peut être immergé dans la composition. Dans un autre mode de réalisation avantageux, la composition peut être appliquée par voie topique sur le corps, notamment par badigeonnage. Il est également possible selon l'invention d'améliorer la pénétration transdermique de la composition par utilisation d'une ou plusieurs techniques telles que l'ionophorèse, l'électroporation, la sonophorèse ou la phonophorèse, comme décrit notamment par CROSS et al. dans Curr. Drug Delivery, 2004, 1, 81-92, par BARRY et al. dans Eur. J. Pharm. Sci., 2001, 14, 101-14 ou par TAO et al. dans Adv. Drug Delivery Rev., 2003, 55, 315-28.

La composition selon l'invention peut également renfermer au moins un agent antiseptique.

Selon un mode de réalisation avantageux, la composition comprend 50-95% en volume d'au moins un composé de formule (I) ; 5-50% en volume de propylène-glycol, et 0-5% en volume d'au moins un agent colorant.

Un autre objet de l'invention concerne un procédé pour conserver un corps humain ou animal et/ou embaumer un corps mort comprenant l'administration au corps d'une composition comprenant au moins un POMM et au moins un diol tel que défini précédemment.

Des avantages du procédé selon l'invention sont la rapidité d'exécution, c'est-à-dire que la vitesse de décoagulation est importante, ainsi que la rapidité de soin.

Dans un premier mode de réalisation avantageux, la composition est injectée par voie intra-artérielle dans le corps.

Préférentiellement, la composition injectée par voie artérielle est une solution aqueuse dont la concentration en POMM va de 1 à 25% en poids. Encore plus préférentiellement, la composition est injectée pure en cavité.

Dans un second mode de réalisation avantageux, la composition est perfusée dans le corps.

Dans un troisième mode de réalisation avantageux, le corps est immergé dans la composition.

Dans un quatrième mode de réalisation avantageux, la composition est appliquée par voie topique sur le corps.

Ces modes d'administration sont bien connus de l'homme du métier.

L'invention sera maintenant illustrée par les exemples non limitatif suivants, qui n'ont pas pour but de limiter la portée de l'invention, définie par les revendications annexées.

### Exemples

### Exemple 1 (non conforme à l'invention)

On mélange 800g de POM-M-2,8 de composition suivante

| N | 2 | 3 | 4 | 5 | 6 | 7 | 8 |
|---|---|---|---|---|---|---|---|
| % | 48 | 33 | 12 | 4 | 1,5 | 0,5 | <0,5 |

et 200g de glycérol. Le mélange reste biphasique

Il ne pourrait être utilisé en thanatopraxie que sous vive agitation.

### Exemple 2 (non conforme à l'invention)

On injecte avec une pompe électrique, dans l'artère fémorale d'une dépouille mortelle d'un homme de 80 kg, 300ml de POM-M-2,8 de composition de l'exemple 1 dilué dans 7,2 litres d'eau, puis on injecte 500ml de POM-M-2,8 en cavité. Le volume total drainé pendant l'injection artérielle est de 6 litres.

Après 4 jours à température ambiante, la conservation du corps est bonne, mais on observe que la peau est sèche et rigide, en particulier au niveau du nez.

### Exemple 3 (conforme à l'invention)

On mélange 900g de POM-M-2,8 de composition de l'exemple 1 et 100g de 1,2-propanediol.

On injecte avec une pompe électrique, dans l'artère fémorale d'une dépouille mortelle d'une femme de 40kg, 200ml du mélange dilué dans 4,3 litres d'eau, puis on injecte 500ml du mélange en cavité. Le volume total drainé pendant l'injection artérielle est de 3 litres. La diffusion du produit dans l'organisme est excellente. La peau apparaît hydratée et souple. Après 4 jours a température ambiante, la conservation du corps est bonne, et la souplesse et l'hydratation de la peau sont maintenues.

## Revendications

1. Composition renfermant :
(a) au moins un polyoxyméthylènedialkyléther (POM) de formule (I) :
R-(OCH₂)ₙ-OR' (I)
dans laquelle R et R', identiques, représentent un radical méthyle et n est un indice de valeur comprise entre 2 et 8,
(b) un diol comprenant 2 à 6 atomes de carbone qui est le propylène glycol,
avec ladite composition comprenant 50-95% en volume dudit composé (I), 5 à 50% en volume de propylène glycol, et 0-5% en volume d'au moins un agent colorant et/ou aromatisant.

2. Composition selon la revendication 1, **caractérisée en ce que** le composé de formule (I) est choisi parmi : CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, et leurs mélanges.

3. Composition selon la revendication 1, **caractérisée en ce que** le composé de formule (I) est un composé POMM₂₋₈ qui est un mélange de composés de formule CH₃-(OCH₂)ₙ-OCH₃ avec n compris entre 2 et 8.

4. Procédé non thérapeutique pour conserver un corps humain ou animal et/ou embaumer un corps mort comprenant l'administration audit corps d'une composition selon l'une quelconque des revendications 1 à 3.

5. Procédé selon la revendication 4, **caractérisé en ce que** la composition est injectée par voie intra-artérielle dans ledit corps.

6. Procédé selon la revendication 4, **caractérisé en ce que** la composition est perfusée dans ledit corps.

7. Procédé selon la revendication 4, **caractérisé en ce que** la composition est appliquée par voie topique sur ledit corps.

## Patentansprüche

1. Zusammensetzung, enthaltend:
(a) mindestens einen Polyoxymethylendialkylether (POM) der Formel (I):
R-(OCH₂)ₙ-OR' (I)
worin R und R' gleich sind und für einen Methylrest stehen und n für einen Index mit einem Wert zwischen 2 und 8 steht,
(b) ein Diol mit 2 bis 6 Kohlenstoffatomen, bei dem es sich um Propylenglykol handelt,
wobei die Zusammensetzung 50 bis 95 Vol.-% der Verbindung (I), 5 bis 50 Vol.-% Propylenglykol 0-5 Vol.-% mindestens eines Farbmittels und/oder Aromatisierungmittels umfasst.

2. Zusammensetzung nach Anspruch 1, **dadurch gekennzeichnet, dass** die Verbindung der Formel (I) aus CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃ und Mischungen davon ausgewählt ist.

3. Zusammensetzung nach Anspruch 1, **dadurch gekennzeichnet, dass** es sich bei der Verbindung der Formel (I) um POMM₂₋₈ handelt, wobei es sich um eine Mischung von Verbindungen der Formel CH₃-(OCH₂)ₙ-OCH₃ mit n zwischen 2 und 8 handelt.

4. Nichttherapeutisches Verfahren zur Konservierung eines menschlichen oder tierischen Körpers und/oder zur Einbalsamierung eines toten Körpers, bei dem man dem Körper eine Zusammensetzung nach einem der Ansprüche 1 bis 3 verabreicht.

5. Verfahren nach Anspruch 4, **dadurch gekennzeichnet, dass** man die Zusammensetzung auf intraarteriellem Wege in den Körper injiziert.

6. Verfahren nach Anspruch 4, **dadurch gekennzeichnet, dass** man die Zusammensetzung in dem Körper perfundiert.

7. Verfahren nach Anspruch 4, **dadurch gekennzeichnet, dass** man die Zusammensetzung auf topischem Wege auf den Körper aufbringt.

## Claims

1. Composition including:
(a) at least one polyoxymethylene dialkyl ether (POM) of formula (I):
R-(OCH₂)ₙ-OR' (I)
in which R and R' , which are identical, represent a methyl radical and n is an index with a value comprised between 2 and 8,
(b) a diol comprising from 2 to 6 carbon atoms which is propylene glycol,
with said composition comprising 50-95% by volume of said compound (I), 5-50% by volume of propylene glycol and 0-5% by volume of at least one colouring agent and/or aromatizing agent.

2. Composition according to Claim 1, **characterized in that** the compound of formula (I) is chosen from: CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃ and their mixtures.

3. Composition according to Claim 1, **characterized in that** the compound of formula (I) is a compound POMM₂₋₈ which is a mixture of compounds of formula CH₃-(OCH₂)ₙ-OCH₃ with n comprised between 2 and 8.

4. Non-therapeutic process for preserving a human or animal body and/or embalming a dead body comprising the administration to said body of a composition according to any one of Claims 1 to 3.

5. Process according to Claim 4, **characterized in that** the composition is injected into said body by the intraarterial route.

6. Process according to Claim 4, **characterized in that** the composition is perfused into said body.

7. Process according to Claim 4, **characterized in that** the composition is applied to said body by the topical route.
